# EUROPEAN PATENT APPLICATION

(11) **EP 1 684 160 A1**
(43) Date of publication of application: **26.07.2006**
(21) Application number: 06000514.7
(22) Date of filing: 11.01.2006
(51) Int. Cl.: G06F 3/048, G06F 3/033, G06K 9/22

(54) **System and method for identifying termination of data entry**

(30) Priority: 12.01.2005 US 35003; 18.11.2005 WO PCT/US2005/041880
(71) Applicant: Leapfrog Enterprises, Inc., Emeryville, CA 94608-1070 (US)
(72) Inventor: Marggraff, James, Lafayette, CA 94549 (US); Chisholm, Alexander, San Francisco, CA 94110 (US); Edgecomb, Tracy L., Berkeley, CA 94703 (US)
(74) Representative: Ebner von Eschenbach, Jennifer

(57) **Abstract**

Computer implemented methods of and systems for inputting data are described. A method for inputting data includes receiving information representing user-written data, the user-written data made with a writing instrument upon a surface. The method further includes defining an active region on the surface surrounding the user written data and recognizing a user performing a prescribed action with the writing instrument indicating completion of the user-written data. In response to recognizing, the method includes terminating the receiving and in response to terminating, the method further includes processing the information to automatically recognize the user-written data.

## Description

### CROSS REFERENCES TO RELATED APPLICATIONS

This Application is a Continuation-in-Part of the co-pending, commonly-owned U.S. Patent Application, Attorney Docket No. 020824-004610US, Serial No. 10/803,806, filed March 17, 2004, by James Marggraff et al., entitled "Scanning Apparatus," and hereby incorporated by reference in its entirety.

This Application is a Continuation-in-Part of the co-pending, commonly-owned U.S. Patent Application, Attorney Docket No. 020824-009500US, Serial No. 10/861,243, filed June 3, 2004, by James Marggraff et al., entitled "User Created Interactive interface," and hereby incorporated by reference in its entirety.

### BACKGROUND OF THE INVENTION

### FIELD OF THE INVENTION

The present invention is related to the field of computer user interfaces.
More specifically, embodiments of the present invention relate to identifying termination of data entry in a user created interactive interface.

### RELATED ART

Devices such as optical readers or optical pens conventionally emit light that reflects off a surface to a detector or imager. As the device is moved relative to the surface (or vice versa), successive images are rapidly captured. By analyzing the images, movement of the optical device relative to the surface can be tracked.

One type of optical pen is used with a sheet of paper on which very small dots are printed. The dots are printed on the page in a pattern with a nominal spacing of about 0.3 millimeters (0.01 inches). The pattern of dots within any region on the page is unique to that region. The optical pen essentially takes a snapshot of the surface, perhaps 100 times a second or more. By interpreting the dot positions captured in each snapshot, the optical pen can precisely determine its position relative to the page.

Applications that utilize information about the position of an optical pen relative to a surface have been or are being devised. An optical pen with Bluetooth or other wireless capability can be linked to other devices and used for sending electronic mail (e-mail) or faxes.

An optical pen may be used to input data to an application via a printable surface. For example, the device may perform real-time character recognition on handwritten symbols. However, it can be difficult to determine when a data input is completed. For example, if a user inputs the number one and then inputs the number two, it is difficult to determine if the user intended to input the number twelve or the individual numbers one and two. The same is true when a user is writing a word. The device needs to know when the word is complete. Thus, determining termination of data entry can be problematic.

### SUMMARY OF THE INVENTION

Accordingly, an optical pen that can determine termination of data entry would be valuable. Embodiments in accordance with the present invention provide this and other advantages.

Embodiments of the present invention include a method for inputting data including receiving information representing user-written data, the user-written data made with a writing instrument upon a surface. The method further includes defining an active region on the surface surrounding the user written data and recognizing a user performing a prescribed action with the writing instrument indicating completion of the user-written data. In response to recognizing, the method includes terminating the receiving and in response to terminating, the method further includes processing the information to automatically recognize the user-written data.

In one embodiment of the invention, a prescribed action comprises determining a writing instrument being tapped within an active region on the surface. In this embodiment of the invention, a tap adjacent to the user-written data indicates termination of data entry in that region of the surface.
Furthermore, a double tap in the active region indicates termination of data entry in that region of the surface.

In another embodiment of the invention, a prescribed action comprises determining that a writing instrument is idle for a predetermined period of time. In this embodiment of the invention, a writing time out threshold is used to determine termination of data entry in that region of the surface. In one embodiment of the invention, the threshold time begins once a writing instrument is lifted from the surface.

In another embodiment of the invention, a prescribed action comprises determining the writing instrument being tapped in a predetermined location on the surface. In one embodiment of the invention, the predetermined location comprises a pre-printed image. In other embodiments, the prescribed action may be a combination of two or more of the above.

In another embodiment of the invention, the prescribed action is application dependent. For example, a first application may allow a time-out termination of data entry and a second application may allow tapping in the active region to terminate data entry. In another embodiment of the invention, an application may allow more than one termination event. These and other objects and advantages of the present invention will be recognized by one skilled in the art after having read the following detailed description, which are illustrated in the various drawing figures.

### BRIEF DESCRIPTION OF THE DRAWINGS

The accompanying drawings, which are incorporated in and form a part of this specification, illustrate embodiments of the invention and, together with the description, serve to explain the principles of the invention:
Figure 1 is a block diagram of a device upon which embodiments of the present invention can be implemented.
Figure 2 is a block diagram of another device upon which embodiments of the present invention can be implemented.
Figure 3 shows an exemplary sheet of paper provided with a pattern of marks according to one embodiment of the present invention.
Figure 4 shows an enlargement of a pattern of marks on an exemplary sheet of paper according to one embodiment of the present invention.
Figure 5 is an illustration of an exemplary tree menu in accordance with an embodiment of the present invention.
Figure 6A is an illustration of an exemplary surface comprising user-written data associated with a dictionary application in accordance with embodiments of the present invention.
Figure 6B is an illustration of an exemplary surface comprising user-written data associated with a calculator application wherein tapping of an active region terminates data entry in accordance with embodiments of the present invention.
Figure 6C is an illustration of an exemplary surface comprising user-written data associated with a calculator application wherein tapping of predetermined area terminates data entry in accordance with embodiments of the present invention.
Figure 7 is a flow diagram of an exemplary computer implemented method of inputting data in accordance with embodiments of the present invention.
Figure 8 is a flow diagram of an exemplary computer implemented method of determining termination of data entry in accordance with embodiments of the present invention.

### DETAILED DESCRIPTION

In the following detailed description of the present invention, numerous specific details are set forth in order to provide a thorough understanding of the present invention. However, it will be recognized by one skilled in the art that the present invention may be practiced without these specific details or with equivalents thereof. In other instances, well-known methods, procedures, components, and circuits have not been described in detail as not to unnecessarily obscure aspects of the present invention.

Some portions of the detailed descriptions, which follow, are presented in terms of procedures, steps, logic blocks, processing, and other symbolic representations of operations on data bits that can be performed on computer memory. These descriptions and representations are the means used by those skilled in the data processing arts to most effectively convey the substance of their work to others skilled in the art. A procedure, computer executed step, logic block, process, etc., is here, and generally, conceived to be a self-consistent sequence of steps or instructions leading to a desired result. The steps are those requiring physical manipulations of physical quantities. Usually, though not necessarily, these quantities take the form of electrical or magnetic signals capable of being stored, transferred, combined, compared, and otherwise manipulated in a computer system. It has proven convenient at times, principally for reasons of common usage, to refer to these signals as bits, values, elements, symbols, characters, terms, numbers, or the like.

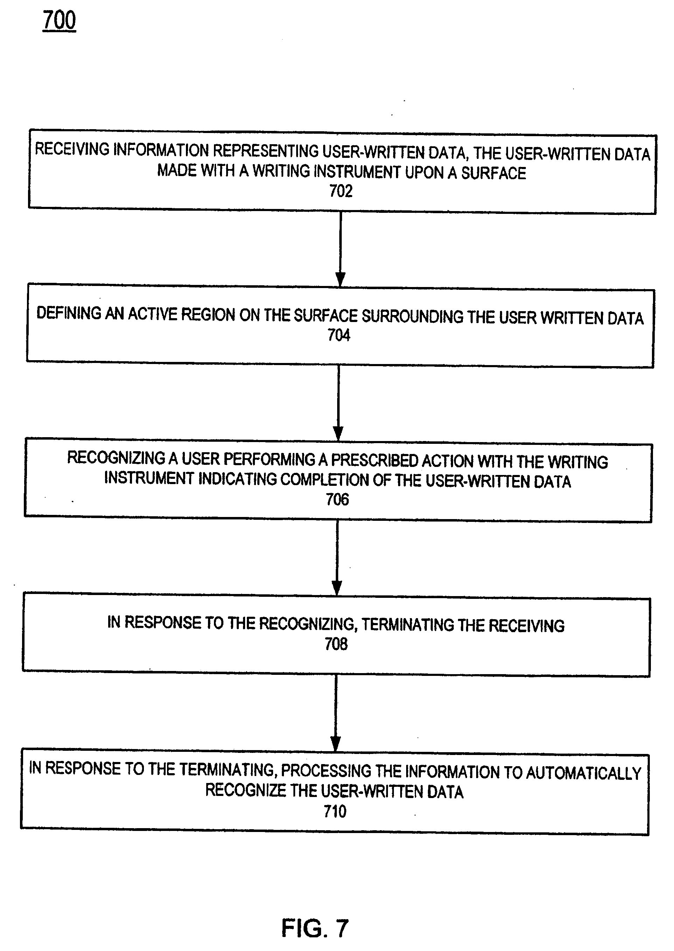

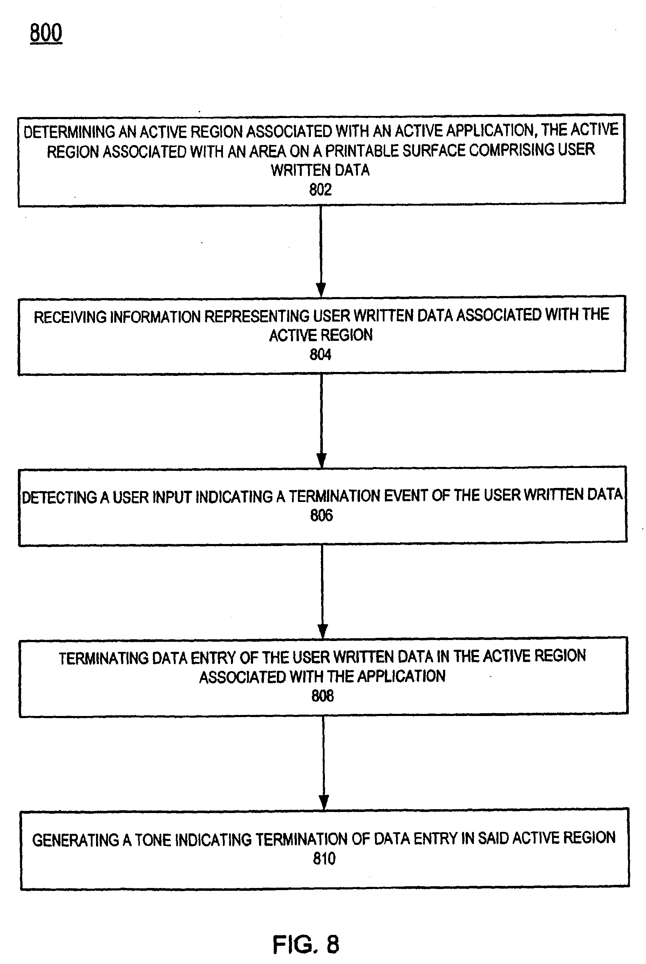

It should be borne in mind, however, that all of these and similar terms are to be associated with the appropriate physical quantities and are merely convenient labels applied to these quantities. Unless specifically stated otherwise as apparent from the following discussions, it is appreciated that throughout the present invention, discussions utilizing terms such as "encoding" or "determining" or "identifying" or "accessing" or "rendering" or "reading" or "receiving" or "identifying" or "terminating" or "executing" or the like, refer to the actions and processes of a computer system (e.g., flowcharts 700 and 800 of Figures 7 and 8), or similar electronic computing device, that manipulates and transforms data represented as physical (electronic) quantities within the computer system's registers and memories into other data similarly represented as physical quantities within the computer system memories or registers or other such information storage, transmission or display devices.

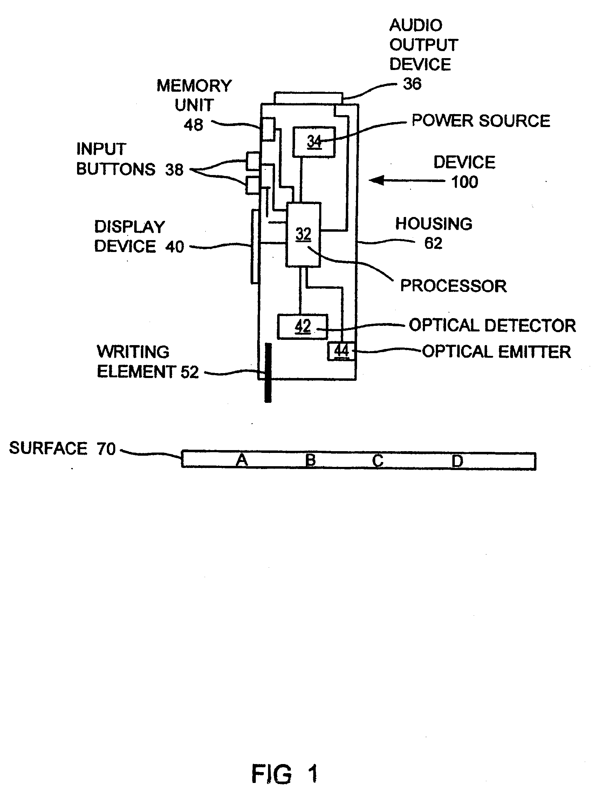

Figure 1 is a block diagram of a device 100 upon which embodiments of the present invention can be implemented. In general, device 100 may be referred to as an optical device, more specifically as an optical reader, optical pen or digital pen.

In the embodiment of Figure 1, device 100 includes a processor 32 inside a housing 62. In one embodiment, housing 62 has the form of a pen or other writing utensil (e.g., writing instrument). Processor 32 is operable for processing information and instructions used to implement the functions of device 100, which are described below.

In the present embodiment, the device 100 may include an audio output device 36 and a display device 40 coupled to the processor 32. In other embodiments, the audio output device and/or the display device are physically separated from device 100, but in communication with device 100 through either a wired or wireless connection. For wireless communication, device 100 can include a transceiver or transmitter (not shown in Figure 1). The audio output device 36 may include a speaker or an audio jack (e.g., for an earphone or headphone). The display device 40 may be a liquid crystal display (LCD) or some other suitable type of display.

In the embodiment of Figure 1, device 100 includes input buttons 38 coupled to the processor 32 for activating and controlling the device 100. For example, the input buttons 38 allow a user to input information and commands to device 100 or to turn device 100 on or off. Device 100 also includes a power source 34 such as a battery.

Device 100 also includes a light source or optical emitter 44 and a light sensor or optical detector 42 coupled to the processor 32. The optical emitter 44 may be a light emitting diode (LED), for example, and the optical detector 42 may be a charge coupled device (CCD) or complementary metal-oxide semiconductor (CMOS) imager array, for example. The optical emitter 44 illuminates surface 70 or a portion thereof. Light reflected from the surface 70 is received at and recorded by optical detector 42.

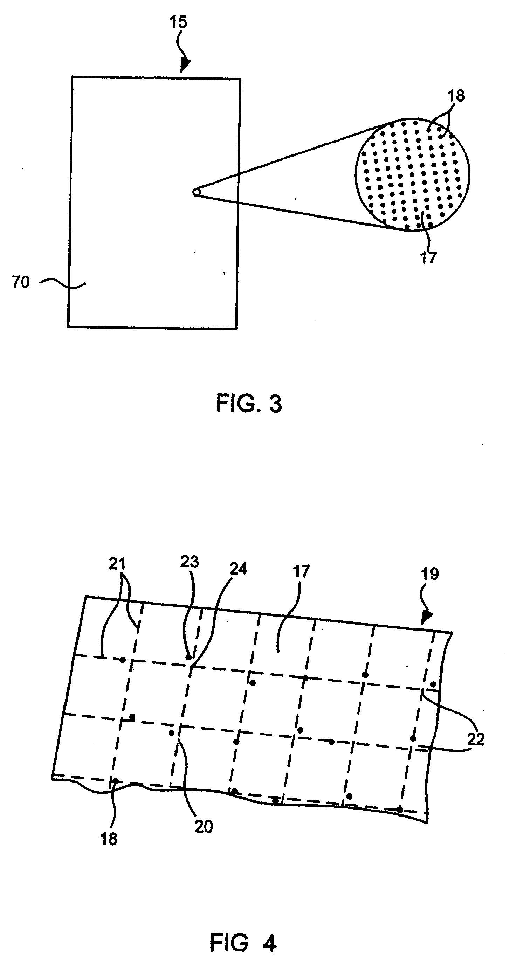

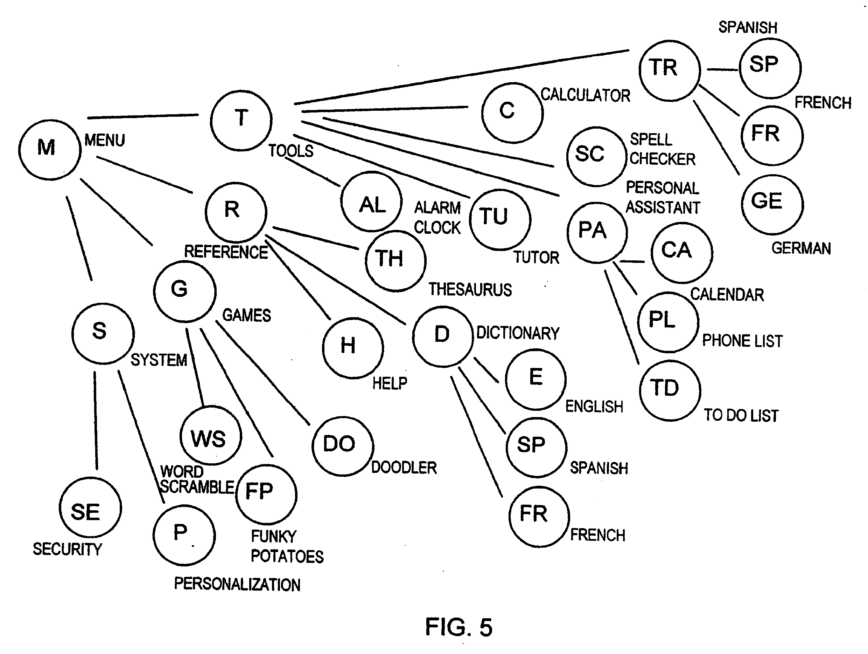

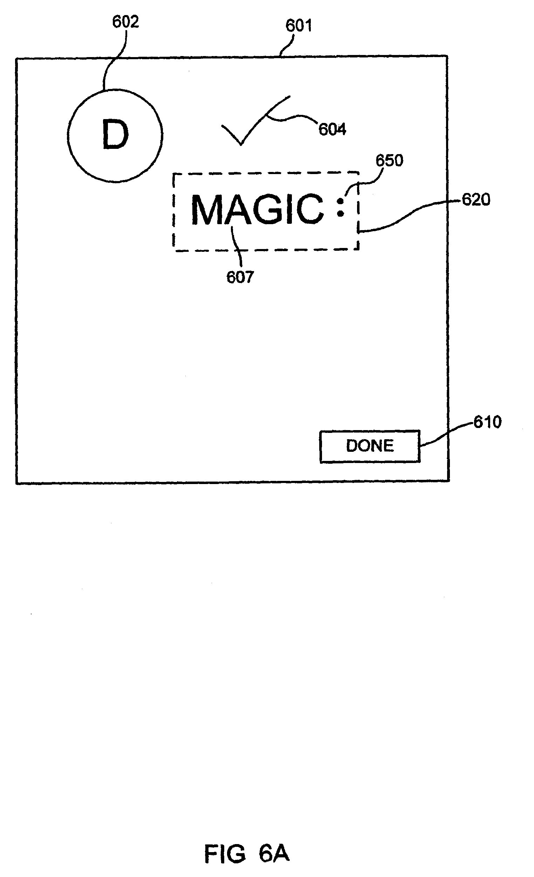

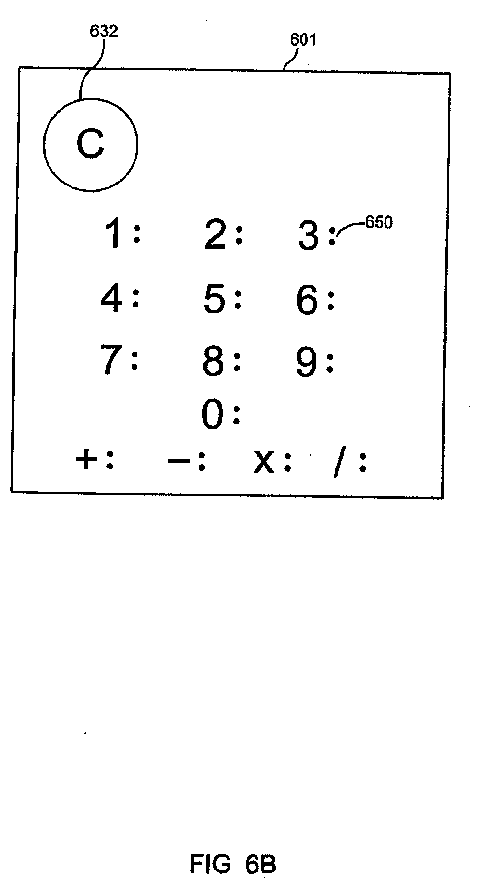

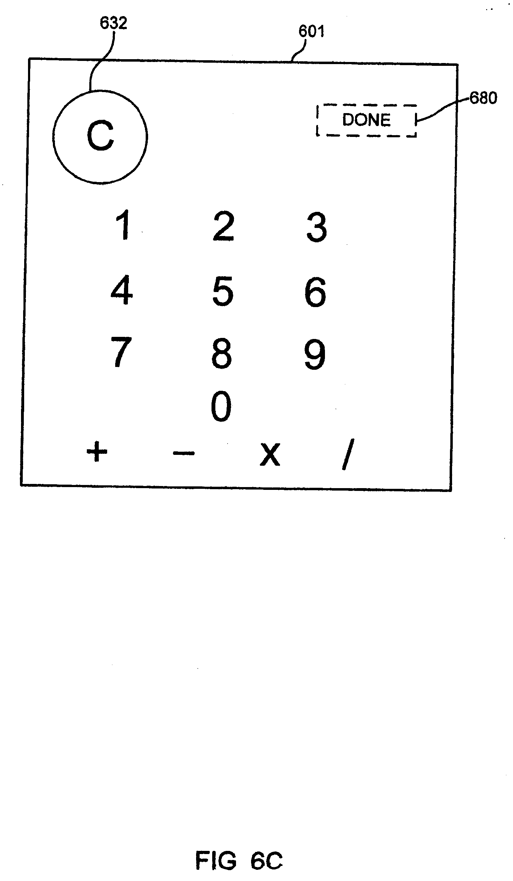

The surface 70 may be any surface suitable to be written on, e.g., a sheet a paper, although the present invention is not so limited. In one embodiment, a pattern of markings is printed on surface 70. In another embodiment of the invention, the surface is a material with electronic ink, a flat panel display LCD display or any other surface or display. The end of device 100 that holds optical emitter 44 and optical detector 42 is placed against or near surface 70. As device 100 is moved relative to the surface 70, the pattern of markings are read and recorded by optical emitter 44 and optical detector 42. As discussed in more detail further below, in one embodiment, the markings on surface 70 are used to determine the position of device 100 relative to surface (see Figures 3 and 4). In another embodiment, the markings on surface 70 are used to encode information (see Figures 5 and 6). The captured images of surface 70 can be analyzed (processed) by device 100 to decode the markings and recover the encoded information.

Additional descriptions regarding surface markings for encoding information and the reading/recording of such markings by electronic devices can be found in the following patents and patent applications that are assigned to Anoto and that are all herein incorporated by reference in their entirety: U.S. Patent No. 6,502,756, U.S. Application No. 101179,966, filed on June 26, 2002, WO 01 /95559, WO 01/71473, WO 01/75723, WO 01/26032, WO 01/75780, WO 01/01670, WO 01/75773, WO 01/71475, WO 10 00/73983, and WO 01116691.

Device 100 of Figure 1 also includes a memory unit 48 coupled to the processor 32. In one embodiment, memory unit 48 is a removable memory unit embodied as a memory cartridge or a memory card. In another embodiment, memory unit 48 includes random access (volatile) memory (RAM) and read-only (non-volatile) memory (ROM) for storing information and instructions for processor 32. The memory unit may be used to store information representing a user written data, e.g., a symbol, a number, a word or words.

In the embodiment of Figure 1, device 100 includes a writing element 52 situated at the same end of device 100 as the optical detector 42 and the optical emitter 44. Writing element 52 can be, for example, a pen, pencil, marker or the like, and may or may not be retractable. In certain applications, writing element 52 is not needed. In other applications, a user can use writing element 52 to make marks on surface 70, including characters such as letters, numbers, mathematical symbols and the like. These marks can be scanned (imaged) and interpreted by device 100 according to their position on the surface 70. The position of the user-produced marks can be determined using a pattern of marks that are printed on surface 70; refer to the discussion of Figures 3 and 4, below. In one embodiment, the user-produced markings can be interpreted by device 100 using optical character recognition (OCR) techniques that recognize handwritten characters.

As mentioned above, surface 70 may be a sheet of paper, although surfaces consisting of materials other than paper may be used. Also, surface 70 may or may not be flat. For example, surface 70 may be embodied as the surface of a globe. Furthermore, surface 70 may be smaller or larger than a conventional (e.g., 8.5x11 inch) page of paper.

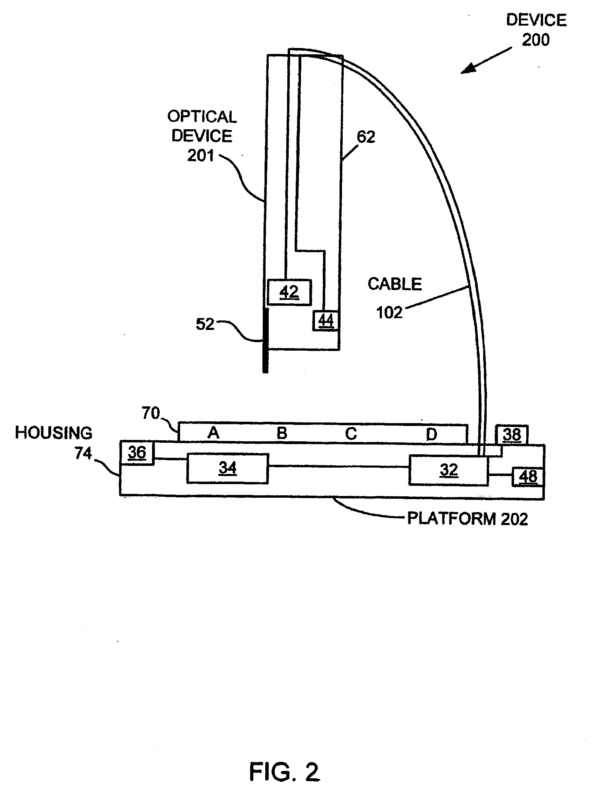

Figure 2 is a block diagram of another device 200 upon which embodiments of the present invention can be implemented. Device 200 includes processor 32, power source 34, audio output device 36, input buttons 38, memory unit 48, optical detector 42, optical emitter 44 and writing element 52, previously described herein. However, in the embodiment of Figure 2, optical detector 42, optical emitter 44 and writing element 52 are embodied as optical device 201 in housing 62, and processor 32, power source 34, audio output device 36, input buttons 38 and memory unit 48 are embodied as platform 202 in housing 74. In the present embodiment, optical device 201 is coupled to platform 202 by a cable 102; however, a wireless connection can be used instead. The elements illustrated by Figure 2 can be distributed between optical device 201 and platform 200 in combinations other than those described above.

Figure 3 shows a sheet of paper 15 provided with a pattern of marks according to one embodiment of the present invention. In the embodiment of Figure 3, sheet of paper 15 is provided with a coding pattern in the form of optically readable position code 17 that consists of a pattern of marks 18. The marks 18 in Figure 3 are greatly enlarged for the sake of clarity. In actuality, the marks 18 may not be easily discernible by the human visual system, and may appear as grayscale on sheet of paper 15. In one embodiment, the marks 18 are embodied as dots; however, the present invention is not so limited.

Figure 4 shows an enlarged portion 19 of the position code 17 of Figure 3. An optical device such as devices 100 and 200 (Figures 1 and 2) is positioned to record an image of a region of the position code 17. In one embodiment, the optical device fits the marks 18 to a reference system in the form of a raster with raster lines 21 that intersect at raster points 22. Each of the marks 18 is associated with a raster point 22. For example, mark 23 is associated with raster point 24. For the marks in an image/raster, the displacement of a mark from the raster point associated with the mark is determined. Using these displacements, the pattern in the image/raster is compared to patterns in the reference system. Each pattern in the reference system is associated with a particular location on the surface 70. Thus, by matching the pattern in the image/raster with a pattern in the reference system, the position of the pattern on the surface 70, and hence the position of the optical device relative to the surface 70, can be determined.

With reference back to Figure 1, four positions or regions on surface 70 are indicated by the letters A, B, C and D (these characters are not printed on surface 70, but are used herein to indicate positions on surface 70). There may be many such regions on the surface 70. Associated with each region on surface 70 is a unique pattern of marks. The regions on surface 70 may overlap because even if some marks are shared between overlapping regions, the pattern of marks in a region is still unique to that region.

In the example of Figure 1, using device 100 (specifically, using writing element 52), a user may create a character consisting, for example, of a circled letter "M" at position A on surface 70 (generally, the user may create the character at any position on surface 70). The user may create such a character in response to a prompt (e.g., an audible prompt) from device 100. When the user creates the character, device 100 records the pattern of markings that are uniquely present at the position where the character is created. The device 100 associates that pattern of markings with the character just created. When device 100 is subsequently positioned over the circled "M," device 100 recognizes the pattern of marks associated therewith and recognizes the position as being associated with a circled "M." In effect, device 100 recognizes the character using the pattern of markings at the position where the character is located, rather than by recognizing the character itself.

In one embodiment, the character is associated with a particular command. In the example just described, a user can create (write) a character that identifies a particular command, and can invoke that command repeatedly by simply positioning device 100 over the written character. In other words, the user does not have to write the character for a command each time the command is to be invoked; instead, the user can write the character for a command one time and invoke the command repeatedly using the same written character.

Figure 5 shows a menu item tree directory according to an embodiment of the invention. The menu item tree directory can embody an audio menu starting from the menu M symbol. The menu tree comprises menu options associated with applications.

Starting from the top of Figure 5, a first audio subdirectory could be a tools T subdirectory. Under the tools T subdirectory, there could be a translator TR subdirectory, a calculator C subdirectory, a spell checker SC subdirectory, a personal assistant PA subdirectory, an alarm clock AL subdirectory, and a tutor TV function. Under the translator TR subdirectory, there would be Spanish SP, French FR, and German GE translator functions (e.g., applications). Under the personal assistant PA subdirectory, there would be calendar C, phone list PL, and to do list TD functions or subdirectories.

Under the reference R subdirectory, there could be thesaurus TH function, a dictionary D subdirectory, and a help H function. Under the dictionary D subdirectory, there can be an English E function, a Spanish SP function, and a French FR function.

Under the games G subdirectory, there can be games such as word scramble WS, funky potatoes FP, and doodler DO. Other games could also be present in other embodiments of the invention.

Under the system S subdirectory, there can be a security SE function, and a personalization P function. As illustrated by the menu item tree-directory, a user may proceed down any desired path by listening to recitations of the various menu items and then selecting the menu item desired. The subsequent selection of the desired menu item may occur in any suitable manner.

For example, in some embodiments, a user can cause the interactive apparatus to scroll through the audio menu by "down touching" on a created graphic element with a writing instrument. The "down touching" may be recognized by the electronics in the interactive apparatus using any suitable mechanism. For instance, the interactive apparatus may be programmed to recognize the image change associated with the downward movement of it towards the selected graphic element. In another example, a pressure sensitive switch may be provided in the interactive apparatus so that when the end of the interactive apparatus applies pressure to the paper, the pressure switch activates. This informs the interactive apparatus to scroll through the audio menu.

For instance, after selecting the circled letter "M" with the interactive apparatus (to thereby cause the pressure switch in the interactive apparatus to activate), the audio output device in the interactive apparatus may recite "tools" and nothing more. The user may select the circled letter "M" a second time to cause the audio output device to recite the menu item "reference". This can be repeated as often as desired to scroll through the audio menu. To select a particular menu item, the user can create a distinctive mark on the paper or provide a specific gesture (e.g., prescribed action) with the writing instrument.

For instance, the user may draw a "checkmark" (or other graphic element) next to the circled letter "M" after hearing the word "tools" to select the subdirectory "tools". Using a method such as this, a user may navigate towards the intended directory, subdirectory, or function in the menu item tree. A different prescribed action may be used to cause the interactive apparatus to perform other operations. For example, embodiments of the present invention comprise methods for recognizing when a user is finished inputting data for a particular application based on prescribed actions.

In one embodiment of the invention, a data input operation is terminated in response to detecting the prescribed action of tapping the last letter of a word, for example. In another embodiment of the invention, a data input operation is terminated in response to detecting the prescribed action of passing a threshold time-out, wherein no user input is detected. In this embodiment of the invention, the prescribed action is no action. In another embodiment of the invention, a data input operation is terminated in response to detecting the prescribed action of tapping a predetermined area on the paper. In this embodiment of the invention, the predetermined area may comprise user generated or pre-printed graphics.

In other embodiments, after creating the letter "M" with a circle, the user may select the circled letter "M". Software in the scanning apparatus recognizes the circled letter "M" as being the menu symbol and causes the scanning apparatus to recite the menu items "tools", "reference", "games", and "system" sequentially and at spaced timing intervals, without down touching by the user.
In one embodiment of the invention, selecting a circled letter makes the corresponding application the active application. In one embodiment of the invention, a user created mark defines an active region associated with the active application.

Figure 6A shows a printable surface 601 with written or printed elements associated with a dictionary application. A user may first start with a blank piece of paper and may draw the circled letter "D" 602 as shown. Then, the user may "select" the circled letter "D" 602 by, for example, tapping the circled letter "D" 602 or selecting a check mark drawn adjacent to the letter. In one embodiment of the invention, in response to a user selection, the interactive apparatus generates an audible tone. For example, the word "dictionary" is recited.

In an embodiment of the invention, a user may start with a pre-printed image on the printable surface 601. For example, a dictionary specific printable surface 601 may be used with a pre-printed circled "D" 602 and a pre-printed checkmark 604. In this embodiment of the invention, a user may select the dictionary application by, for example, tapping the pre-printed circled "D" 602.

After selection of an active application (e.g., dictionary), the interactive apparatus may then prompt the user to input data (e.g., write on the printable surface 601). For example, in the dictionary application, the user may then write the word "magic" 607 as shown in Figure 6A. While writing the word "magic" 607, the interactive apparatus determines the area surrounding the characters of the word "magic" 607 to be the active region 620 on the printable surface 601. In one embodiment of the invention, prescribed actions are identified to terminate data input in the active region 620. The active region 620 defines a location on the surface.

In one embodiment of the invention, tapping in the active region 620 (e.g., at the end of the word) indicates to the interactive apparatus that the user is done writing the intended word and that the interactive.apparatus should recognize the word and then produce the dictionary definition. In one embodiment of the invention, double tapping in the active region 620 indicates that the user is done writing the intended word. Dots 650 are user written marks on the printable surface 601 and in the active region 620 resulting form a double tapping in the active region with a writing instrument.

Alternatively, waiting a threshold time-out period indicates to the interactive apparatus that the user is done writing the intended word and that the interactive apparatus should produce the dictionary definition. In another embodiment of the invention selection of a predetermined area 610 of the printable surface 601 indicates to the interactive apparatus that the user is done writing the intended word and that the interactive apparatus should produce the dictionary definition.

In one embodiment of the invention, the active region 620 is a virtual box around any or all of the characters of the user written data. If the user selects any region within this virtual box, this may indicate to the interactive apparatus that the user is done writing the intended word. In one embodiment of the invention, a single or double tap in the active region 620 indicates termination of data entry in the active region. The processor on the device may be programmed to recognize any or all of the above examples as user termination events.

Figure 6B is an illustration of an exemplary printable surface comprising user written data associated with a calculator application wherein tapping of an active region terminates data entry in accordance with embodiments of the present invention. In this embodiment of the invention, the printable surface 601 comprises a circled letter "C" corresponding to a calculator application. In this embodiment of the invention, a user may be prompted to create a calculator by writing the numbers zero through nine, the plus operand symbol, the minus operand symbol, the multiplication operand symbol and the division operand symbol.

Suppose the user wrote the numbers without any action to indicate termination of an individual number. The string one-two-three could be interpreted as the number one-hundred-twenty-three instead of the intended separate numbers one, two and three. To solve this issue, embodiments of the present invention recognize prescribed user-performed actions that indicate user intended termination of data entry. As stated above, one such action is tapping in the active region of the user created data. Figure 6B illustrates user created marks 650 next to each number and operand symbol resulting from a double tapping in the active region of each character. In Figure 6B, the active region of each character is not illustrated, however, the active region can be defined as an area of the printable surface that surrounds each character or string of characters

Figure 6C is an illustration of an exemplary printable surface comprising user written data associated with a calculator application wherein tapping of a predetermined area 680 of the printable surface terminates data entry in accordance with embodiments of the present invention. In this example, the printable surface 601 comprises a predetermined area 680 suited to terminate data entry when selected.

In this embodiment of the invention, the user taps the predetermined area 680 to terminate data entry. For example, after writing the number one, a user may tap the predetermined area 680 to terminate data entry opposed to the termination action illustrated in Figure 6B wherein termination required tapping the active region of the character. As a result, the numbers of Figure 6C do not have user created marks in the active regions of the characters as shown in Figure 6B.

In one embodiment of the invention, the predetermined area 680 can be user selectable. In this embodiment of the invention, a user may graphically bind the predetermined area 680 by drawing a border around it.

In another embodiment of the invention, the predetermined area 680 comprises pre-printed images. For example, in Figure 6C, the predetermined area 680 comprises the word "done." In one embodiment of the invention, pre-printed surfaces can be application specific.

Figures 6B and 6C illustrate examples of user actions that can terminate data entry. It is appreciated that an application may allow more than one prescribed action to terminate data entry. For example, with reference to Figure 6C, a user may have tapped the predetermined location 680 to terminate entry of the numbers zero through nine and may have double tapped in the active region of each mathematical operand symbol to terminate entry of each operand symbol.

In another embodiment of the invention, a user action may include ceasing to write for a predetermined period of time. In this embodiment of the invention, a user may pause between writing the characters to differentiate each intended character.

Figure 7 is a flow diagram of an exemplary computer implemented method 700 of inputting data including prescribed user data entry termination events in accordance with embodiments of the present invention.

At step 702, process 700 includes receiving information from the optical sensor representing user-written data, the user-written data made with a writing instrument (e.g., device 100 or 200 of Figures 1 and 2) upon a surface. This information may include encoded information regarding the image of the written information, e.g., stroke data, that may include location information gathered from encoded paper.

In one embodiment of the invention, the writing surface comprises encoded position information that can be used to determine a specific location on the surface. In one embodiment of the invention, the surface can be defined as a plurality of regions wherein each of the plurality of regions is associated with a unique printed image. In this instance, the data is representative of the real-time location of the writing instrument on the surface as the user writes.

In one embodiment of the invention, the unique printed images are dot patterns. In one embodiment of the invention, the information representing user-written data may be received wirelessly (e.g., via a Bluetooth wireless connection or any other wireless connections known in the art).

At step 704, process 700 includes automatically defining an active region on the surface surrounding the user written data. In one embodiment of the invention, an area encompassing the user written data defines the active region. As the user is writing, the processor automatically defines a surface region to encompass the user written data.

At step 706, process 700 includes recognizing a user performing a prescribed action or event with the writing instrument indicating completion of the user-written data. In one embodiment of the invention, the prescribed action includes the writing instrument being tapped within the active region. In this embodiment, the writing instrument may be tapped a predetermined number of times within the active region. Also in this embodiment of the invention, the writing instrument may be tapped on a letter or number of the user written data. The tap may be made on or near the last character written of the user written data.

In another embodiment of the invention, the prescribed action includes the writing instrument ceasing to be used to write user written data for a predetermined period of time (e.g., threshold time). In this embodiment of the invention, receiving no information that represents user written data for the predetermined period of time indicates termination of the user written data. In one embodiment of the invention, the period of time begins once the writing instrument is lifted from the printable surface. In another embodiment of the invention, the period of time begins once receiving information representing user written data ends.

In another embodiment of the invention, the prescribed action includes the writing instrument being tapped in a predetermined location of the surface. In one embodiment of the invention, the predetermined location on the surface comprises a pre-printed image that may indicate a termination word. For example, the pre-printed image may be the word "done" printed on the surface. In this embodiment of the invention, selecting the pre-printed word "done" terminates the receiving of information representing the user written data. Applications may be programmed to respond to one, two, or all of the above described termination events.

In one embodiment of the invention, the prescribed action is application specific. For example, a first application may allow different prescribed actions than a second application. In another embodiment of the invention, an application may allow multiple prescribed actions to terminate an event.

At step 708, process 700 includes in response to the recognizing of the termination event, terminating the receiving of the user written data. In one embodiment of the invention, identification of a prescribed action terminates the receiving.

At step 710, process 700 includes in response to the terminating of recognizing user written data, processing the information to automatically recognize the user-written data. In one embodiment of the invention, the user-written data can be recognized after termination of the receiving. This step may include automatic recognition of the data and after the data is recognized, the processor may implement some action related to a word, for example, the processor may define the word, translate the word, etc.

For example, in the dictionary mode, a user may write a plurality of words. Using a termination event after each word, an action related to a dictionary application will be taken after each termination event. A user may then go back to a previously defined word and select it. The word will still be recognized and the definition will be presented in response to selecting the word. In another example, after the user writes a word, then taps the last character thereof, the processor then performs an identification of the word and a definition is then rendered. In one embodiment of the invention, processing the information includes generating an audio response.

Figure 8 is a flow diagram of an exemplary computer implemented process 800 of determining termination of data entry in accordance with embodiments of the present invention where an audible tone is generated as feedback to a user that the user written word has been completed and acknowledged.

At step 802, process 800 includes determining an active region associated with an active application, the active region associated with an area on a printable surface comprising user written data. In one embodiment of the invention, an area encompassing user-written data determines an active region.

At step 804, process 800 includes receiving information from the optical sensor representing user written data associated with the active region.

At step 806, process 800 includes detecting a user input indicating a termination event of the user written data. In one embodiment of the invention, a user input indicating a termination event of said user written data is application specific. The user input can be any one of or all of the prescribed actions described in conjunction with Figures 6A-6C.

At step 808, process 800 includes terminating data entry of the user written data in the active region associated with the application. In one embodiment of the invention, termination of data entry allows differentiation of user-written characters or words. For example, by performing one of the prescribed actions described above, the number twelve can be distinguished from the numbers one and two.

At step 810, process 800 includes generating a tone indicating termination of data entry in the active region. In one embodiment, multiple tones can be generated to distinguish between data entry termination actions, for example. Subsequent steps may then process the user written data, e.g., optical character recognition (OCR).

Broadly, this writing has described computer implemented methods of and systems for inputting data. A method for inputting data includes receiving information representing user-written data, the user-written data made with a writing instrument upon a surface. The method further includes defining an active region on the surface surrounding the user written data and recognizing a user performing a prescribed action with the writing instrument indicating completion of the user-written data. In response to recognizing, the method includes terminating the receiving and in response to terminating, the method further includes processing the information to automatically recognize the user-written data.

Embodiments of the present invention are thus described. While the present invention has been described in particular embodiments, it should be appreciated that the present invention should not be construed as limited by such embodiments, but rather construed according to the below claims.

## Claims

1. A computer implemented method of inputting data comprising:
receiving information representing user-written data, said user-written data made with a writing instrument upon a surface;
defining an active region on said surface surrounding said user written data;
recognizing a user performing a prescribed action with said writing instrument indicating completion of said user-written data;
in response to said recognizing, terminating said receiving; and
in response to said terminating, processing said information to automatically recognize said user-written data.

2. A method as described in Claim 1 wherein said prescribed action is said writing instrument being tapped within said active region.

3. A method as described in Claim 2 wherein said writing instrument is tapped near the end of said user-written data.

4. A method as described in Claim 1 wherein said prescribed action is said writing instrument being double tapped within said active region.

5. A method as described in Claim 1 wherein said prescribed action is said writing instrument ceasing to be used to write user-written data for a predetermined period of time.

6. A method as described in Claim 1 wherein said prescribed action is said writing instrument being tapped in a prescribed location of said surface and wherein said prescribed location bears a pre-printed image thereon.

7. A method as described in Claim 1 wherein said writing instrument comprises a processor operable to execute a plurality of applications and wherein said prescribed action is application specific.

8. A method as described in Claim 1 wherein said user-written data is a user-written symbol, character, word or number.

9. A method as described in Claim 8 wherein said user written data is circled.

10. A method as described in Claim 1 wherein said user-written data is a plurality of user-written words or numbers.

11. A computer system comprising:
a processor coupled to a bus;
a sensor for sensing images on a surface;
a writing instrument;
a memory coupled to said bus and comprising instructions that when executed implement a method of inputting data, said method comprising:
receiving information from said sensor representing user-written data, said user-written data made with said writing instrument upon said surface;
defining an active region on said surface surrounding said user written data;
recognizing a user performing one of a plurality of prescribed actions with said writing instrument indicating completion of said user-written data;
in response to said recognizing, terminating said receiving; and
in response to said terminating, processing said information to automatically recognize said user-written data.

12. A computer system as described in Claim 11 wherein one of said plurality of prescribed actions is said writing instrument being tapped within said active region.

13. A computer system as described in Claim 12 wherein said writing instrument is tapped near the end of said user-written data.

14. A computer system as described in Claim 12 wherein one of said plurality of prescribed actions is said writing instrument being double tapped within said active region.

15. A computer system as described in Claim 12 wherein one of said plurality of prescribed actions is said writing instrument ceasing to be used to write user-written data for a predetermined period of time.

16. A computer system as described in Claim 15 wherein one of said plurality of prescribed actions is said writing instrument being tapped in a prescribed location of said surface and wherein said prescribed location bears a pre-printed image thereon.

17. A computer system as described in Claim 11 wherein said processor is operable to execute a plurality of applications and wherein said plurality of prescribed actions are application specific.

18. A computer system as described in Claim 11 wherein said user-written data is a user-written word.

19. A computer system as described in Claim 11 wherein said user-written data is a plurality of user-written words.

20. A method for determining termination of data entry comprising:
determining an active region associated with an active application, said active region associated with an area on a printable surface comprising user written data;
receiving information representing user written data associated with said active region;
detecting a user input indicating a termination event of said user written data; and
terminating data entry of said user written data in said active region associated with said application.

21. The method as described in Claim 20 wherein said active region is an area surrounding said user written data.

22. The method as described in Claim 20 wherein said detecting comprises:
detecting a writing instrument being tapped in said active region.

23. The method as described in Claim 22 wherein said detecting tapping said writing instrument in said active region comprises:
detecting said writing instrument being double tapped in said active region.

24. The method as described in Claim 22 wherein said detecting tapping said writing instrument in said active region further comprises:
detecting said writing instrument being tapped in a predetermined area of said printable surface outside said active region.

25. The method as described in Claim 22 wherein said detecting tapping said writing instrument in said active region further comprises:
detecting a writing time-out greater than a predetermined threshold of time.

26. The method as described in Claim 23 further comprising:
generating an audible signal indicating termination of data entry in said active region.

27. The method as described in Claim 26 further comprising:
generating a first audible signal in response to a first tap of said writing instrument in said active region; and
generating a second audible signal in response to a second tap of said writing instrument in said active region.

28. The method as described in Claim 20 wherein said printable surface comprises location encoded information.

29. The method as described in Claim 22 wherein said writing instrument being tapped in said active region generates user-written marks on said printable surface.

30. The method as described in Claim 22 wherein said writing instrument being tapped in said active region comprises:
detecting tapping of said writing instrument adjacent to said user written data.

31. The method as described in Claim 20 wherein said termination event is application specific.

32. A method for determining termination of data entry comprising:
determining an active region associated with an active application, said active region associated with an area on a printable surface comprising user written data;
receiving information representing user written data associated with said active region; and
terminating data entry of said user written data in said active region associated with said active application in response to passage of a predetermined threshold of time in which no user written data is received.

33. The method as described in Claim 32 wherein said predetermined threshold of time depends on said active application.

34. The method as described in Claim 32 wherein said predetermined threshold of time begins after a writing instrument is lifted from said printable surface.

35. The method as described in Claim 32 wherein said predetermined threshold of time begins after a writing instrument contacts said printable surface.

36. A method for determining termination of data entry comprising:
determining an active region associated with an active application, said active region associated with an area on a printable surface comprising user written data;
receiving information representing user written data associated with said active region;
detecting a user selection of a predetermined area of said printable surface; and
terminating data entry of said user written data in said active region associated with said application in response to said user selection.

37. The method as described in Claim 36 wherein said predetermined area of said printable surface comprises a pre-printed image.

38. The method as described in Claim 37 wherein said pre-printed image is associated with a termination instruction understood by an interactive computer system.

39. A device comprising:
a writing instrument;
a sensor for optically sensing images from a surface;
a processor coupled to said sensor; and
a memory coupled to said processor, said memory unit containing instructions that when executed implement a method for recognizing data entry termination, said method comprising:
determining an active region associated with an active application, said active region associated with an area on a printable surface comprising user written data;
receiving information representing user written data associated with said active region;
detecting a user input indicating a termination event of said user written data; and
terminating data entry of said user written data in said active region associated with said application.

40. The device as described in Claim 39 wherein said detecting comprises:
detecting tapping said writing instrument in said active region.

41. The device as described in Claim 40 wherein said detecting tapping said writing instrument in said active region comprises:
detecting a writing time-out that is greater than a predetermined threshold of time.

42. The device as described in Claim 39 wherein said method further comprises:
generating a tone indicating termination of data entry in said active region.

43. The device as described in Claim 39 wherein said termination event is application specific.
